# EUROPEAN PATENT APPLICATION

(11) **EP 4 843 824 A1**
(43) Date of publication of application: **25.11.2026**
(21) Application number: 26161691.6
(22) Date of filing: 02.03.2026
(51) Int. Cl.: B60L 58/16, B60K 35/22, B60K 35/28, B60L 3/00, B60L 3/12, B60L 50/60, B60L 53/10, B60L 53/68, B60L 53/80, B60L 55/00

(54) **ANNUNCIATION CONTROL DEVICE AND VEHICLE**

(30) Priority: 19.05.2025 JP 2025083261
(71) Applicant: Toyota Jidosha Kabushiki Kaisha, Toyota-shi, Aichi-ken 471-8571 (JP)
(72) Inventor: KOBAYASHI, Ayano, Toyota-shi, 471-8571 (JP)
(74) Representative: D Young & Co LLP

(57) **Abstract**

Prior to a second user using a power storage device that was used by a first user, an annunciation control device acquires a sudden death risk of the power storage device based on first information and second information. The first information indicates a usage history of the power storage device by the first user. The second information indicates a scheduled way of use of the power storage device by the second user. The sudden death risk indicates a probability that the power storage device will suddenly enter an unusable state while being used by the second user. The annunciation control device executes first annunciation control to present a way of use that is different from the way of use indicated by the second information to at least one of the first user and the second user, when the sudden death risk is higher than a reference value.

## Description

### BACKGROUND OF THE INVENTION

### 1. Field of the Invention

The present disclosure relates to an annunciation control device that announces information related to a power storage device, and a vehicle.

### 2. Description of Related Art

Japanese Unexamined Patent Application Publication No. 2020-64030 (JP 2020-64030 A) discloses a technology for announcing a degree of aging deterioration (e.g., capacity retention rate) of a power storage device (secondary battery) installed in a vehicle to a user.

### SUMMARY OF THE INVENTION

However, the life of a power storage device is not necessarily determined solely by a degree of aging deterioration of the power storage device. The aforementioned JP 2020-64030 A does not take into consideration sudden death of the power storage device whatsoever. The sudden death of a power storage device is a phenomenon in which a power storage device that was previously usable suddenly is in an unusable state.

The present disclosure has been made to solve the above-mentioned problem, and an object thereof is to present users with a way of use of a power storage device, taking sudden death into consideration.

According to one aspect of the present disclosure, there is provided an annunciation control device. The annunciation control device is configured to, prior to a second user using a power storage device that was used by a first user, acquire a sudden death risk of the power storage device based on first information and second information. The first information indicates a usage history of the power storage device by the first user. The second information indicates a scheduled way of use of the power storage device by the second user. The sudden death risk indicates a probability that the power storage device will suddenly enter an unusable state while being used by the second user. The annunciation control device is also configured to execute first annunciation control to present a way of use that is different from the way of use indicated by the second information to at least one of the first user and the second user, when the sudden death risk is higher than a reference value.

According to the present disclosure, an annunciation control device and a vehicle can be provided that can present users with a way of use of a power storage device, taking sudden death into consideration.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a configuration of a vehicle according to an embodiment of the present disclosure;
FIG. 2 is a flowchart showing first annunciation control according to the embodiment;
FIG. 3 is a diagram for describing an acquiring method of sudden death risk according to the embodiment;
FIG. 4 is a flowchart showing a method for acquiring a way of use that is presented in the first annunciation control;
FIG. 5 is a diagram illustrating an example of a screen displayed in the first annunciation control; and
FIG. 6 is a flowchart showing second annunciation control according to the embodiment.

### DETAILED DESCRIPTION OF EMBODIMENTS

An embodiment of the present disclosure will be described in detail with reference to the drawings. The same or corresponding portions are denoted by the same signs throughout the drawings, and description thereof will not be repeated.

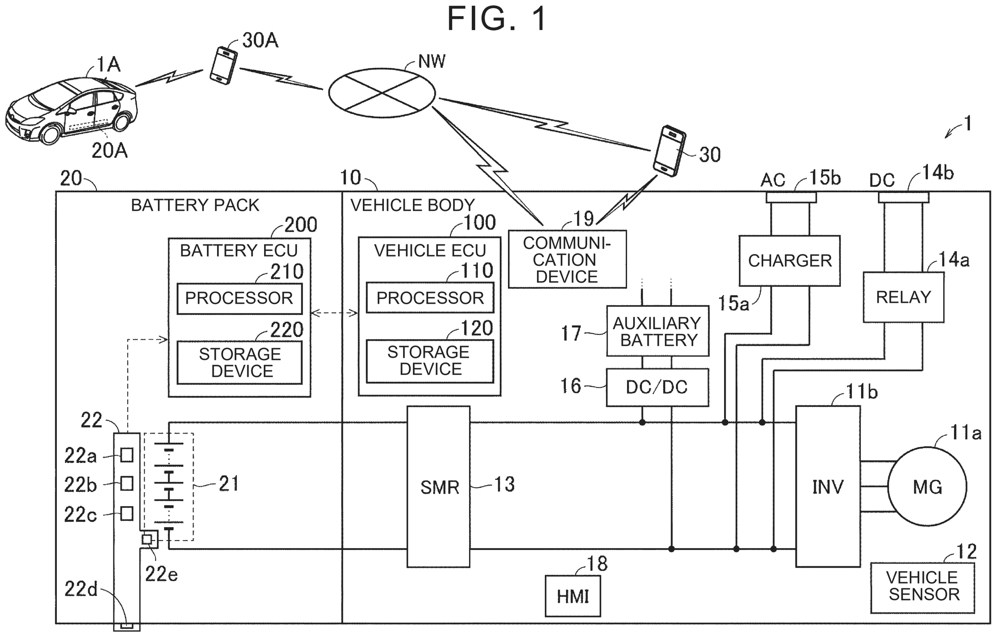

FIG. 1 is a diagram illustrating a configuration of a vehicle according to this embodiment. A vehicle 1 illustrated in FIG. 1 includes a vehicle body 10 and a battery pack 20. The vehicle body 10 refers to a portion of the vehicle 1 excluding the battery pack 20. The battery pack 20 corresponds to an example of "power storage device" according to the present disclosure.

The vehicle body 10 includes a motor generator (MG) 11a, an inverter 11b, a vehicle sensor 12, a system main relay (SMR) 13, a direct current (DC) charging relay 14a, a DC inlet 14b, an alternating current (AC) charger 15a, an AC inlet 15b, a DC-to-DC converter 16, an auxiliary battery 17, a human-machine interface (HMI) 18, a communication device 19, and a vehicle ECU 100. The battery pack 20 includes a battery 21, a monitoring unit 22, and a battery ECU 200. The term "ECU" stands for electronic control unit. The vehicle 1 is configured to be capable of traveling using power output from the battery 21. The vehicle 1 is, for example, a battery electric vehicle (BEV) that is not equipped with an internal combustion engine. However, this is not restrictive, and the vehicle 1 may be a plug-in hybrid electric vehicle (PHEV).

The vehicle ECU 100 includes a processor 110 and a storage device 120. The battery ECU 200 includes a processor 210 and a storage device 220. Each of the processors 110, 210 has a timer function. The timer function is realized by, for example, a timer circuit or software. Each of the storage devices is configured to be capable of saving information that is stored therein. The processors execute programs stored in the storage devices to execute various types of control.

The vehicle ECU 100 and the battery ECU 200 are configured to be communicable with each other. The vehicle ECU 100 consecutively receives signals indicating the state of the vehicle 1 from each of various types of sensors included in the vehicle sensor 12 and the battery ECU 200, and controls various types of equipment. In this embodiment, the vehicle sensor 12 includes an outside air temperature sensor and a travel distance meter (e.g., odometer).

The inverter 11b drives the MG 11a using power supplied from the battery 21. The MG 11a converts power into torque to rotate drive wheels of the vehicle 1. Also, the MG 11a performs regenerative power generation during deceleration of the vehicle 1, for example and charges the battery 21 therewith. The SMR 13 selectively connects/interrupts an electrical path between the battery 21 and the inverter 11b. The SMR 13 corresponds to a relay that switches between permission/prohibition of charging and discharging of the battery pack 20 (battery 21).

The DC inlet 14b and the AC inlet 15b are configured to enable connection by a DC charging cable and an AC charging cable, respectively. During AC charging, the vehicle ECU 100 controls the AC charger 15a in a state in which the SMR 13 is in a closed state (connected state) and also alternating current power is being input from outside of the vehicle to the AC charger 15a via the AC inlet 15b. The AC charger 15a converts the alternating current power into direct current power in accordance with a control command from the vehicle ECU 100 and outputs the direct current power to the battery 21. During DC charging, direct current power is input from outside the vehicle to the DC inlet 14b, and the vehicle ECU 100 switches the SMR 13 and the DC charging relay 14a to a closed state (connected state). The vehicle 1 is configured to be capable of executing external charging (charging of battery 21 using power supplied from outside of vehicle) via each inlet while parked.

The DC-to-DC converter 16 performs voltage conversion of direct current power. For example, the DC-to-DC converter 16 steps down direct current power from the battery 21 and performs output thereof to the auxiliary battery 17. The auxiliary battery 17 supplies power for driving auxiliary devices installed in the vehicle 1. The ECUs may also receive supply of power from the auxiliary battery 17. The HMI 18 includes an input device and a display device. The input device outputs signals to the vehicle ECU 100 in accordance with user input. The display device displays information to the user in accordance with instructions from the vehicle ECU 100.

The battery 21 is a secondary battery such as a lithium ion battery, for example. An electric double layer capacitor may be employed instead of the secondary battery. In this embodiment, the battery 21 is a battery assembly, and more specifically includes a plurality of power storage cells (secondary batteries) that are electrically connected. The power storage cells included in the battery 21 are restrained by a pair of end plates (constraining plates).

The monitoring unit 22 includes a voltage sensor 22a that detects voltage of the battery 21, a current sensor 22b that detects current of the battery 21, a battery temperature sensor 22c that detects temperature of the battery 21, and an ambient temperature sensor 22d that detects ambient temperature of the battery pack 20 (temperature around battery pack 20), and a load sensor 22e that detects constraining load in the battery 21. Detection results from the sensors included in the monitoring unit 22 are output to the battery ECU 200. The battery ECU 200 acquires a State of Charge (SOC) of the battery 21 based on output of the monitoring unit 22. The SOC indicates the charge level (proportion of current amount of charge to amount of charge in a fully charged state).

The storage device 220 of the battery ECU 200 stores user information of the battery pack 20, usage history information of the battery pack 20, State of Health (SOH) of the battery pack 20, and distance after SOH update. The user information includes information (e.g., identification information) about all users who have used the battery pack 20 over a period from an initial state (new state) of the battery pack 20 to the present. The user information may indicate at least one of name, address, and contact information (e.g., communication address of user terminal) for each of a first user who has finished using the battery pack 20 and a second user who will begin using the battery pack 20. The usage history information indicates usage history of the battery pack 20. The usage history information may indicate at least one of usage time of the battery pack 20, the ambient temperature, frequency of external charging, and frequency of discharging. The SOH is a parameter that indicates a degree of aging deterioration. In this embodiment, the capacity retention rate is employed as the SOH. The distance after SOH update indicates a cumulative traveling distance by the vehicle 1 after the SOH display has been updated, more specifically, a cumulative value of the distance traveled by the vehicle 1 without the SOH display being updated.

A mobile terminal 30 corresponds to a user terminal of the vehicle 1. A mobile terminal 30A corresponds to the user terminal of the vehicle 1A. The mobile terminals 30 and 30A are carried by the users of the vehicles 1 and 1A, respectively. In this embodiment, each of the mobile terminals 30, 30A that is employed is a smartphone equipped with a computer and a touchscreen display.

The communication device 19 may include a wireless communication device such as a data communication module (DCM), for example. The vehicle ECU 100 is configured to be capable of accessing a communication network NW (e.g., a wide area network made up of the Internet and wireless base stations) via the communication device 19. Each of the mobile terminals 30 and 30A is also configured to be capable of accessing the communication network NW. The vehicle ECU 100 is configured to communicate with the mobile terminal 30A via the communication network NW. The vehicle ECU 100 is also configured to communicate with the mobile terminal 30, either via the communication network NW or directly.

The battery pack 20 illustrated in FIG. 1 is configured to be replaceable with another battery pack. In this embodiment, the user of vehicle 1 purchases a battery pack 20A from a user of a vehicle 1A. However, this sales contract is concluded after the battery pack 20A is attached to the vehicle 1. Specifically, the battery pack 20 that has been used in the vehicle 1 is removed from the vehicle 1. Also, the battery pack 20A that has been used in the vehicle 1A is removed from the vehicle 1A. The battery pack 20A is then attached to the vehicle 1. A configuration of the battery pack 20A is basically the same as a configuration of the battery pack 20 illustrated in FIG. 1. The battery pack 20A includes the battery 21, the monitoring unit 22, and the battery ECU 200. Note, however, that the state of the battery 21 (e.g., capacity retention rate) and contents of the storage device 220 (usage history information, etc.) differ from one battery pack to another. The configuration of the battery pack 20A is basically the same as the configuration of the battery pack 20 illustrated in FIG. 1.

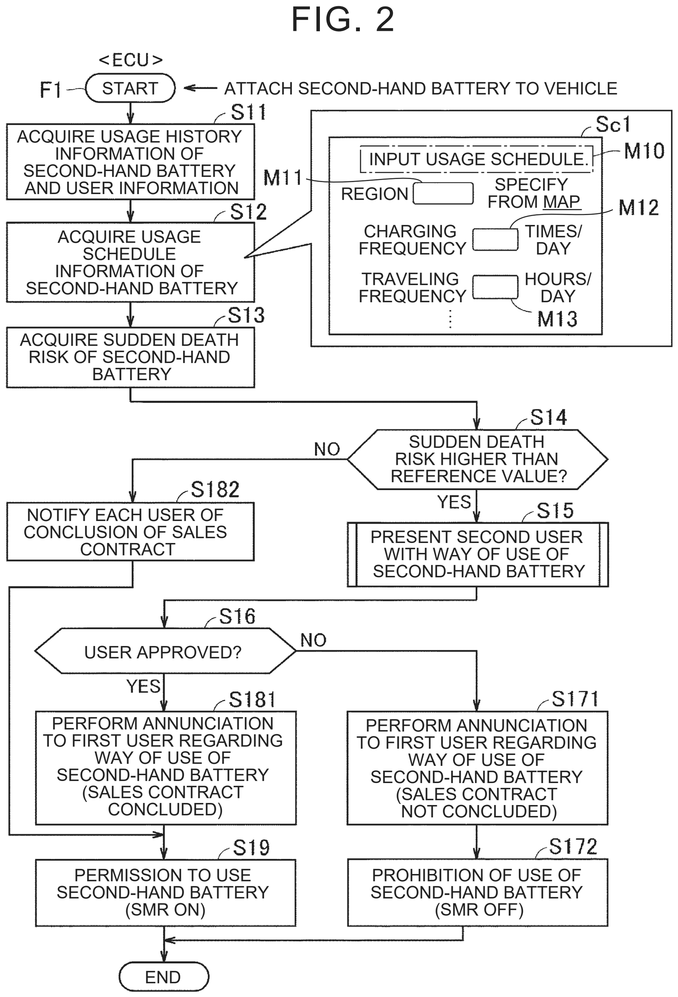

When the battery pack 20A is attached to the vehicle 1 instead of the battery pack 20, the vehicle ECU 100 starts a processing flow F1 shown in FIG. 2. When the processing flow F1 starts, the SMR 13 is in an interrupted state (off state). The vehicle ECU 100 may detect the attachment of the battery pack 20A (second-hand battery pack) based on communication with the battery ECU 200 of the battery pack 20A. FIG. 2 is a flowchart showing first annunciation control according to this embodiment. The letter "S" in the flowchart indicates step.

In the processing flow F1, the vehicle ECU 100 acquires user information and usage history information of the battery pack 20A, from the storage device 220 of the battery pack 20A, for example, in S11. However, this is not restrictive, and the vehicle ECU 100 may acquire the user information and the usage history information of the battery pack 20A from a server that manages information regarding a plurality of power storage devices.

In this embodiment, the user who has previously used the battery pack 20A (hereinafter referred to as "first user") is only the user of vehicle 1A. The user who is about to start using the battery pack 20A (hereinafter referred to as "second user") is the user of vehicle 1. The user information of the battery pack 20A indicates the communication addresses of each of the mobile terminals 30, 30A.

The usage history information of the battery pack 20A indicates the usage time, the ambient temperature, the frequency of external charging, and the frequency of discharging, of the battery pack 20A. The usage time of the battery pack 20A is the time that has elapsed since the battery pack 20A began to be used in the vehicle 1A. The usage time is measured, for example, by the timer function of the processor 210, and is stored in the storage device 220. The ambient temperature of the battery pack 20A is measured by, for example, the ambient temperature sensor 22d, and is stored in the storage device 220. The frequency of external charging is the number of times that external charging occurs per unit period (e.g., the number of times that external charging occurs per day). The frequency of discharging is the time during which the battery pack 20A is in a discharging state within a unit period (e.g., the discharging time per day). For example, the processor 210 calculates the frequency of charging and discharging using the output of the current sensor 22b, and stores the frequency in the storage device 220.

In the subsequent S12, the vehicle ECU 100 acquires usage schedule information of the battery pack 20A. This usage schedule information indicates how the second user is scheduled to use the battery pack 20A. Specifically, the vehicle ECU 100 requests the mobile terminal 30 (user terminal of second user) for usage schedule information of the battery pack 20A. The mobile terminal 30 displays a screen Sc1, for example, in accordance with the request from the vehicle ECU 100.

The screen Sc1 includes a message M10 and input fields M11 to M13. The message M10 prompts the second user to input usage schedule information. The input field M11 accepts input of the region of use in which the second user is scheduled to use the battery pack 20A. Boundaries of each region can be set optionally. Regions may also be segmented in accordance with prefectures (states, provinces, etc.). The input field M12 receives an input of the frequency of external charging of the battery pack 20A that the second user is scheduled to perform. The input field M13 accepts input of traveling frequency of the vehicle 1 scheduled by the second user (e.g., time during which vehicle 1 is in a traveling state within a unit period). When input to each of the input fields M11 to M13 is completed, the mobile terminal 30 transmits, to the vehicle ECU 100, usage schedule information regarding a way to use the battery pack 20A. The usage schedule information includes information input by the second user to the input fields M11 to M13.

The vehicle ECU 100 estimates the ambient temperature of the battery pack 20A using the region input to the input field M11, and estimates the frequency of discharge of the battery pack 20A using the traveling frequency input to the input field M13. The ambient temperature of the battery pack 20A varies depending on the region in which the battery pack 20A is used. The higher the traveling frequency of the vehicle 1 is, the higher the discharging frequency of the battery pack 20A will be.

The vehicle ECU 100 acquires usage schedule information indicating the scheduled way of use of the battery pack 20A by the second user, by the method described above, for example. The usage schedule information includes a plurality of parameters (e.g., ambient temperature, frequency of external charging, and frequency of discharging of battery pack 20A). Note that the acquiring method of the usage schedule information is not limited to the above method, and can be changed as appropriate. The vehicle ECU 100 may perform the above estimation instead of the mobile terminal 30. Also, before the battery pack 20 is removed from the vehicle 1, the vehicle ECU 100 may acquire the usage schedule information for the battery pack 20A in the vehicle 1, based on usage history information for the battery pack 20 in the vehicle 1, assuming that the battery pack 20A will be used in the same way as the battery pack 20 in the vehicle 1.

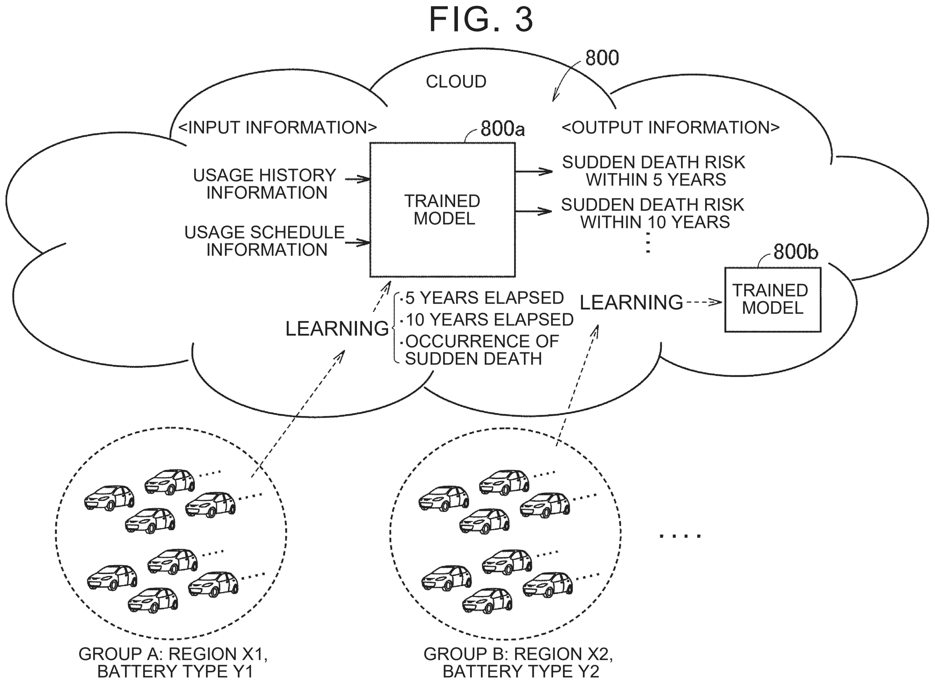

In the subsequent S13, the vehicle ECU 100 acquires a sudden death risk for the battery pack 20A based on the usage history information acquired in S11 and the usage schedule information acquired in S12. Sudden death of the battery pack 20A is a phenomenon in which the battery pack 20A, which was usable until immediately before, suddenly is in an unusable state. A state in which the battery pack 20A is unusable means that the battery pack 20A cannot be charged or discharged. The sudden death of the battery pack 20A may occur due to developments that cannot be seen from the outside, such as electrolyte depletion, swelling inside the battery case, and so forth. However, identifying the cause of sudden death is difficult. The sudden death risk of the battery pack 20A indicates the probability that sudden death of the battery pack 20A will occur. The vehicle ECU 100 may acquire the sudden death risk of the battery pack 20A from the server 800 in the cloud, illustrated in FIG. 3, by transmitting the usage history information and usage schedule information of the battery pack 20A along with information indicating the type of the battery pack 20A (e.g., model information) to the server 800.

FIG. 3 is a diagram for describing a trained model that the server 800 has. The server 800 acquires data relating to the power storage device (battery pack) from each of a plurality of vehicles, for example, by wireless communication. The data sent from each vehicle to the server 800 (hereinafter referred to as "vehicle data") includes usage history information of the battery pack and information indicating whether there has been sudden death of the battery pack. Each of the vehicles transmits vehicle data to the server 800 every time a predetermined number of years (hereinafter also referred to as "learning interval") elapses. In the example illustrated in FIG. 3, the learning interval is set to five years. However, the learning interval can be set optionally. Also, each of the vehicles transmits vehicle data indicating "occurrence of sudden death" to the server 800 at a timing of sudden death occurring in a battery pack in use.

The server 800 groups the vehicles based on the type of battery and the region of use. Specifically, the server 800 groups together a plurality of vehicles that use the same type of battery pack in the same region. The types of battery packs may be distinguished by model. Group A includes a plurality of vehicles using a battery pack of model Y1 in region X1. Group B includes a plurality of vehicles using a battery pack of model Y2 in region X2.

The server 800 may acquire a trained neural network (trained model) by performing supervised machine learning with an untrained neural network, using vehicle data managed for each group. The server 800 may acquire a trained model by performing machine learning using battery pack usage history information (e.g., ambient temperature, frequency of external charging, and frequency of discharging) as explanatory variables and whether sudden death of the battery pack will occur as the objective variable. The server 800 may use average values or integrated values of five years' worth of vehicle data acquired from each vehicle for training the neural network.

Models 800a and 800b illustrated in FIG. 3 are trained models acquired for groups A and B, respectively. When usage history information indicating that the usage time is shorter than a first number of years, and usage schedule information, regarding a battery pack, are input, each model outputs the probability that the battery pack will undergo sudden death before the usage time of the battery pack exceeds the first number of years (first sudden death risk). When usage history information indicating that the usage time is longer than the first number of years but is shorter than a second number of years, and usage schedule information, regarding a battery pack, are input, each model outputs the probability that the battery pack will undergo sudden death before the usage time of the battery pack exceeds the second number of years (second sudden death risk). Each model outputs the sudden death risk (output information) in accordance with how the battery pack is used. Of the input information, the ambient temperature, the frequency of external charging, and the frequency of discharging, indicated by the usage history information, indicate how the battery pack was used during a period within the usage time. Also, among the input information, the ambient temperature, the frequency of external charging, and the frequency of discharging, indicated by the usage schedule information, indicate how the battery pack will be used in a period exceeding the usage time. That is to say, each model acquires the sudden death risk by assuming that the battery pack will be used in the manner indicated by the usage schedule information, for a period exceeding the usage time. In the example illustrated in FIG. 3, the first number of years and the second number of years are set to 5 and 10 years, respectively. However, the first number of years and the second number of years can be set optionally.

In a case in which the vehicle 1 belongs to group A, the server 800 inputs the usage history information and the usage schedule information acquired from the vehicle 1 into the model 800a, in S13 of FIG. 2, thereby acquiring the sudden death risk (first or second sudden death risk) of the battery pack 20A from the model 800a. The server 800 then transmits the obtained sudden death risk of the battery pack 20A to the vehicle 1. In this embodiment, the usage time of the battery pack 20A is less than 10 years.

In the subsequent S14, the vehicle ECU 100 determines whether the sudden death risk (e.g., the first or second sudden death risk) of the battery pack 20A acquired in S13 is higher than a predetermined reference value. When the sudden death risk of the battery pack 20A is higher than the reference value (YES in S14), the vehicle ECU 100 acquires a recommended way of use of the battery pack 20A in S15 and executes control (first annunciation control) to present the recommended way of use to the second user.

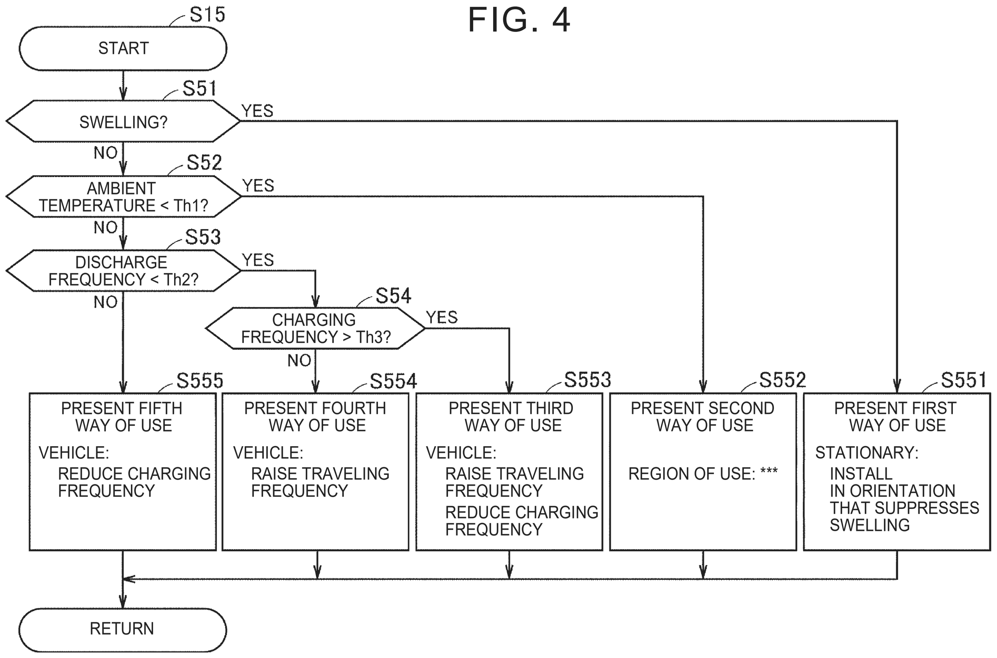

FIG. 4 is a flowchart showing details of S15 in FIG. 2. In S51, the vehicle ECU 100 determines whether swelling of the battery 21 in the battery pack 20A has been detected. The vehicle ECU 100 determines whether the battery 21 is swollen based on, for example, whether the constraining load detected by the load sensor 22e exceeds a predetermined value. When internal pressure of the electricity storage cell increases, due to gas generation inside the case of the power storage cell, and so forth, the power storage cell swells. Further, the greater the swelling amount of each of the power storage cells included in the battery 21 is, the greater the constraining load of the battery 21 becomes. Note that the swelling detection technique is optional. The vehicle ECU 100 may determine whether the battery 21 is swollen based on images of the battery 21 shot by a camera, for example.

When swelling of the battery 21 is detected (YES in S51), the vehicle ECU 100 controls the mobile terminal 30 in S551 such that a first way of use is announced. The first way of use includes using the battery pack 20A as a stationary power storage device in an orientation that suppresses swelling of the battery 21. When the battery pack 20A is installed in an orientation such that a direction in which the power storage cells included in the battery 21 are arrayed matches the direction of gravity, the constraining load on the battery 21 is tends to increase due to the effects of gravity. With respect to the battery pack 20A, the orientation in which swelling of the battery 21 is suppressed may be, for example, a direction such that the direction in which the power storage cells are arrayed does not match the direction of gravity, and may be a direction such that the direction in which the power storage cells are arrayed is a direction perpendicular to the direction of gravity.

When swelling of the battery 21 is not detected (NO in S51), in S52, the vehicle ECU 100 determines whether the ambient temperature indicated by the usage schedule information acquired in S12 of FIG. 2 is lower than a predetermined value (hereinafter referred to as "Th1"). When the ambient temperature is lower than Th1 (YES in S52), the vehicle ECU 100 controls the mobile terminal 30 such that a second way of use is announced in S552. The second way of use includes using the battery pack 20A in a recommended region. The recommended region is different from the region (region in which the vehicle 1 is used) input to the input field M11 (FIG. 2). When the battery pack 20A is used in the recommended region, the ambient temperature of the battery pack 20A is predicted to be equal to or higher than Th1. It is thought that the sudden death risk rises when the battery pack 20A is used in a cold climate. Using the battery pack 20A in the recommended region (region that is not cold) can suppress sudden death of the battery pack 20A.

When the ambient temperature is equal to or higher than Th1 (NO in S52), in S53, the vehicle ECU 100 determines whether the frequency of discharging indicated by the usage schedule information acquired in S12 of FIG. 2 is lower than a predetermined value (hereinafter referred to as "Th2"). When the frequency of discharging is lower than Th2 (YES in S53), in S54, the vehicle ECU 100 determines whether the frequency of external charging indicated by the usage schedule information acquired in S12 of FIG. 2 is higher than a predetermined value (hereinafter referred to as "Th3").

When the frequency of discharging is lower than Th2 and also the frequency of external charging is higher than Th3 (YES in both S53 and S54), the vehicle ECU 100 controls the mobile terminal 30 in S553 such that a third way of use is announced. The third way of use includes the vehicle 1 that is equipped with the battery pack 20A travelling at a frequency equal to or higher than a recommended traveling frequency in the region input to the input field M11 (FIG. 2), and also performing external charging of the battery pack 20A at a frequency equal to or lower than a recommended charging frequency. The recommended traveling frequency is a traveling frequency of the vehicle 1 at which the frequency of discharging of the battery pack 20A is Th2 or higher. The recommended charging frequency is Th3, or a frequency that is lower than Th3. When the vehicle 1 (battery pack 20A) is left unused for long periods of time, the sudden death risk is thought to rise. Also, when the frequency of external charging of the battery pack 20A becomes excessively high, the sudden death risk is thought to rise. According to the third way of use, the vehicle 1 travels at the recommended traveling frequency or a higher frequency, and also external charging of the battery pack 20A is performed at the recommended charging frequency or a lower frequency, whereby sudden death of the battery pack 20A can be suppressed.

When the frequency of discharging is lower than Th2, and also the frequency of external charging is Th3 or lower (YES in S53 and NO in S54), the vehicle ECU 100 controls the mobile terminal 30 in S554 such that a fourth way of use is announced. The fourth way of use includes the vehicle 1 equipped with the battery pack 20A traveling at a frequency equal to or higher than the recommended traveling frequency, in the region input to the input field M11 (FIG. 2), and also performing external charging of the battery pack 20A at the charging frequency input to the input field M12 (FIG. 2). The recommended traveling frequency in the fourth way of use is higher than the traveling frequency input in the input field M13 (FIG. 2).

When the frequency of discharging is Th2 or higher (NO in S53), the vehicle ECU 100 controls the mobile terminal 30 such that a fifth way of use is notified in S555. The fifth way of use includes the vehicle 1 equipped with the battery pack 20A traveling at the traveling frequency input to the input field M13 (FIG. 2), in the region input to the input field M11 (FIG. 2), and performing external charging of the battery pack 20A at the recommended charging frequency or lower. The recommended charging frequency in the fifth way of use is lower than the charging frequency input to the input field M12 (FIG. 2).

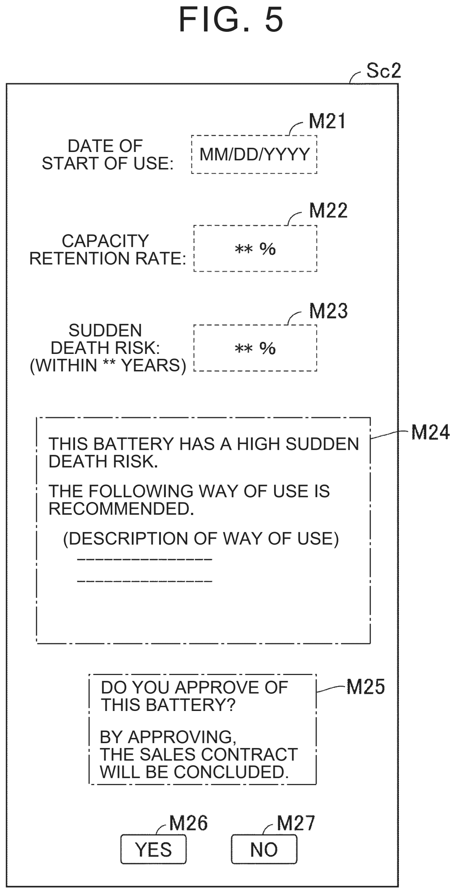

The recommended traveling frequencies in each of the third and the fourth ways of use may be the same or different. The recommended charging frequencies in the third and the fifth ways of use may be the same or different. In each of the above steps S551 to S555, the vehicle ECU 100 executes the first annunciation control. Through the first annunciation control, the mobile terminal 30 displays a screen Sc2 illustrated in FIG. 5, for example.

The screen Sc2 displays a date of start of use M21, a degree of aging deterioration M22, and a sudden death risk M23, regarding the battery pack 20A. The date of start of use M21 indicates the date of start of use identified by the usage time of the battery pack 20A (e.g., the date when the use of the battery pack 20A in the vehicle 1A illustrated in FIG. 1 started). The degree of aging deterioration M22 indicates the SOH (e.g., capacity retention rate). The vehicle ECU 100 may acquire the SOH from the storage device 220 of the battery pack 20A. The sudden death risk M23 indicates the sudden death risk acquired in S13 in FIG. 2.

The screen Sc2 further includes messages M24, M25, and buttons M26, M27. The message M24 notifies the second user of a way of use of the battery pack 20A, taking into consideration sudden death (more specifically, one of the first to fifth ways of use described above). In steps S551, S552, S553, S554, and S555 in FIG. 4, the first way to use, the second way to use, the third way to use, the fourth way to use, and the fifth way to use, are displayed in the message M24, respectively. The message M25 requests the second user to select whether to approve the battery pack 20A (and hence battery sales contract). The mobile terminal 30 stands by, with the screen Sc2 displayed, until the second user operates one of the buttons M26 and M27. When either of the buttons is operated, the mobile terminal 30 transmits a signal corresponding to the user operation to the vehicle ECU 100.

When any one of the processing in S551 to S555 shown in FIG. 4 is executed, the processing advances to S16 in FIG. 2. In S16, the vehicle ECU 100 determines whether the second user has approved the battery pack 20A. When the button M26 (FIG. 5) has been operated, determination of YES is made in S16. In this case, in S181, the vehicle ECU 100 controls the mobile terminal 30A such that annunciation is performed regarding a way of use that takes sudden death into consideration. Through this annunciation control, the mobile terminal 30A notifies the first user of the way of use indicated in the message M24 (FIG. 5), and that the sales contract regarding the battery pack 20A has been concluded. Thereafter, the vehicle ECU 100 switches the SMR 13 from the interrupted state (off state) to the connected state (on state) in S19. Thus, charging and discharging of the battery pack 20A is permitted. In the processing of S19, the use of the battery pack 20A in the vehicle 1 is permitted.

On the other hand, when the button M27 (FIG. 5) has been operated, determination of NO is made in S16. In this case, in S171, the vehicle ECU 100 controls the mobile terminal 30A such that annunciation is performed regarding a way of use that takes sudden death into consideration. Through this annunciation control, the mobile terminal 30A notifies the first user of the way of use indicated in the message M24 (FIG. 5), and that the sales contract regarding the battery pack 20A has not been concluded. Thereafter, the vehicle ECU 100 maintains the SMR 13 in the interrupted state in S172. Charging and discharging of the battery pack 20A is prohibited. The processing of S172 prohibits the use of the battery pack 20A in the vehicle 1.

When the sudden death risk of the battery pack 20A is below the reference value (NO at S14), the vehicle ECU 100 controls the mobile terminals 30 and 30A in S182 to perform annunciation to the first user and the second user that the sales contract regarding the battery pack 20A has been concluded. Thereafter, the processing advances to S19, where the vehicle ECU 100 sets the SMR 13 to the connected state.

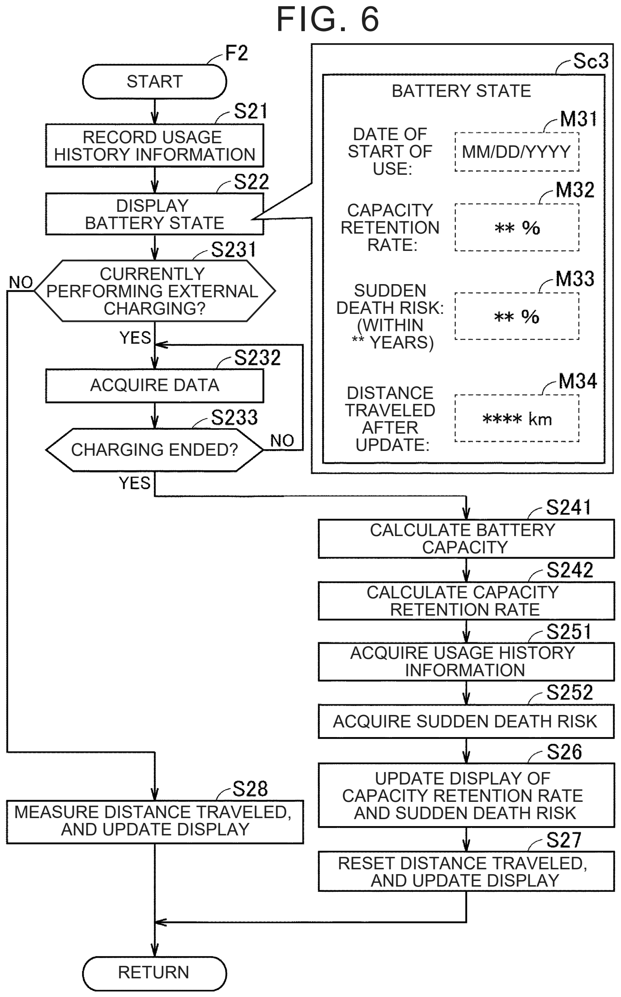

When the processing of S172 or S19 is executed, the processing flow F1 ends. Note, however, that when the process of S19 is executed, a processing flow F2 shown in FIG. 6 starts after the processing flow F1 ends. FIG. 6 is a flowchart showing second annunciation control in the vehicle 1. In a period in which the SMR 13 is in the connected state, the vehicle ECU 100 may repeatedly execute the processing flow F2 described below.

In S21, the vehicle ECU 100 acquires data for obtaining usage history information of the battery pack 20A and saves the data in the storage device 120. Next, in S22, the vehicle ECU 100 controls the mobile terminal 30 so as to perform annunciation of the state of the battery pack 20A. In accordance with this annunciation control, the mobile terminal 30 displays a screen Sc3, for example. The screen Sc3 displays date of start of use M31, degree of aging deterioration M32, sudden death risk M33, and distance after SOH update M34, regarding the battery pack 20A. The date of start of use M31, the degree of aging deterioration M32, and the sudden death risk M33 display information equivalent to the date of start of use M21, the degree of aging deterioration M22, and the sudden death risk M23 illustrated in FIG. 5, respectively. However, the degree of aging deterioration M32 and the sudden death risk M33 are each updated in S26, which will be described later. The distance after SOH update M34 initially indicates a predetermined value (initial value). However, the distance after SOH update M34 is updated in S28, which will be described later. The initial value of the distance after SOH update M34 may be the minimum value that can be displayed (0 km) or the maximum value that can be displayed (65535 km in 16-bit binary format). By setting the initial value of the distance after SOH update M34 to the maximum value, the user can easily determine whether external charging has been carried out since the battery pack 20A was attached to the vehicle 1.

In the subsequent S231, the vehicle ECU 100 determines whether external charging of the battery pack 20A (battery 21) is being performed. For example, when the vehicle 1 is traveling, the determination in S231 is NO. When external charging of the battery pack 20A is not being performed (NO in S231), the vehicle ECU 100 updates the display of the distance after SOH update M34 through communication with the mobile terminal 30 in S28. The vehicle ECU 100 uses the travel distance meter to cumulate the distance traveled by the vehicle 1 since the minimum value was set as the distance after SOH update. The vehicle ECU 100 then sets a cumulative value that is obtained as the distance after SOH update. Thereafter, the processing returns to the first step (S21). While the vehicle 1 is traveling, the processing of S28 is repeatedly executed, and the distance after SOH update M34 increases in accordance with the traveling distance. As the reliability of the display of each of the degree of aging deterioration M32 and the sudden death risk M33 decreases, the distance after SOH update M34 increases.

When external charging of the battery pack 20A is started (YES in S231), the vehicle ECU 100 acquires data for obtaining usage history information and degree of aging deterioration of the battery pack 20A in S232, and saves the data in the storage device 120. In the subsequent S233, the vehicle ECU 100 determines whether external charging has ended. During external charging (NO in S233), the above data is acquired and saved in the storage device 120 by the processing in S232.

When external charging of the battery pack 20A is completed (YES in S233), the vehicle ECU 100 calculates capacity C1 of the battery pack 20A (battery 21) in S241 in accordance with an expression "C1 = 100 × dST/|SOC1 - SOC2|", for example. The capacity C1 corresponds to the amount of electric energy stored in the battery 21 when fully charged. "SOC1" means the SOC at the time of starting charging. "SOC2" means the SOC at the time of ending charging. "dST" means the amount of charging power (amount of power input to battery 21 by external charging). For example, when the amount of charging power when the SOC of the battery 21 is increased from 10% to 60% by external charging is "25 kWh", the capacity C1 of the battery 21 is "50 kWh (= 100 × 25/50)".

Subsequently, the vehicle ECU 100 calculates the capacity retention rate (SOH) of the battery 21 in S242. The capacity retention rate represents the percentage of the current capacity relative to the initial capacity. The initial capacity is stored in the storage device 220. The current capacity is the capacity C1. The greater the degree of aging deterioration of the battery pack 20 is, the lower the capacity retention rate of the battery pack 20 (batteries 21) becomes.

In the subsequent step S251, the vehicle ECU 100 acquires the latest usage history information of the battery pack 20A (e.g., ambient temperature, frequency of external charging, and frequency of discharging), and saves the latest usage history information in the storage device 220 through communication with the battery ECU 200. Next, in S252, the vehicle ECU 100 acquires the sudden death risk of the battery pack 20A based on the usage history information of the battery pack 20A. The processing of S252 is basically the same as the processing of S13 in FIG. 2. The vehicle ECU 100 acquires the sudden death risk of the battery pack 20A from the server 800, for example. However, the usage time of the battery pack 20A is longer than when S13 was executed, and the information amount of usage history information is greater. Accordingly, in S252, a more reliable sudden death risk can be obtained than when S13 was executed.

In the subsequent step S26, the vehicle ECU 100 communicates with the mobile terminal 30 to update each of the displays of the degree of aging deterioration M32 and the sudden death risk M33. Specifically, the vehicle ECU 100 controls the mobile terminal 30 such that the capacity retention rate (SOH) and the sudden death risk of the battery pack 20A, acquired in S242 and S252 respectively, are displayed.

In the subsequent S27, the vehicle ECU 100 sets the distance after SOH update to the minimum value (0 km). Also, the vehicle ECU 100 updates the display of the distance after SOH update M34 through communication with the mobile terminal 30. This facilitates comprehension by the user that the degree of aging deterioration M32 and the sudden death risk M33 have been updated. Thereafter, the processing returns to S21.

As described above, the vehicle ECU 100 (annunciation control device) according to this embodiment acquires the sudden death risk of the power storage device (battery pack 20A) used by the first user, before usage thereof by the second user, based on the usage history information of the power storage device (first information) and the usage schedule information of the power storage device (second information) (S13). The usage history information indicates the usage history (usage history of primary usage) of the power storage device by the first user. The usage schedule information indicates how the second user is scheduled to use the power storage device (way of use that is scheduled in secondary usage). The sudden death risk indicates a probability that the power storage device will suddenly enter an unusable state while being used by the second user. When the sudden death risk is higher than the reference value, the vehicle ECU 100 then executes the first annunciation control (S15, S171, S181) that presents the first user and the second user with a way of use that is different from the way of use indicated by the second information (see FIG. 4). According to this configuration, the user can be presented with a way to use the power storage device, taking sudden death into consideration.

The vehicle ECU 100 executes second annunciation control (S22) of displaying the degree of aging deterioration of the power storage device and the sudden death risk of the power storage device on the same screen. This facilitates accurate comprehension of the state of the power storage device by the user. In the above embodiment, the degree of aging deterioration and the sudden death risk of the power storage device are updated simultaneously. Further, when the sudden death risk is higher than a reference value and also meets predetermined requirements, the vehicle ECU 100 uses the first annunciation control to present the first user and the second user with a way of use of the power storage device in the vehicle 1 (e.g., any one of third to fifth ways of use). Also, when the sudden death risk is higher than the reference value and also does not meet the above predetermined requirements, the vehicle ECU 100 uses the first annunciation control to present the first user and the second user with using the power storage device without being installed in the vehicle 1 (e.g., first or second ways of use). In the example shown in FIG. 4, when the determination in both S51 and S52 is NO, the above predetermined requirements are met, and when the determination in either S51 or S52 is YES, the above predetermined requirements are not met. Note, however, that the above predetermined requirements can be changed as appropriate.

Mobile terminals other than smartphones (wearable devices, automotive scan tools, etc.) may also be employed as user terminals. The user terminal is not limited to a mobile terminal, and may be an in-vehicle terminal (e.g., HMI 18). At least part of the functions of the vehicle ECU 100 may be implemented in a user terminal. The parameter indicating the degree of aging deterioration of the power storage device is not limited to the capacity retention rate. For example, an internal resistance value may be employed instead of the capacity retention rate. The input information for the model illustrated in FIG. 3 can be changed as appropriate. The input information may include a charging and discharging pattern. The model 800a may be stored in the storage device 120 of the vehicle 1. The server 800 may acquire the sudden death risk using a database instead of a neural network.

In the above embodiment or modification, one or more processors execute programs stored in one or more storage devices, thereby executing the processing flows F1 and F2. However, such processing may be carried out solely by hardware (electronic circuits). Also, the processing flows F1 and F2 can be modified as appropriate. At least one of S171, S181, and S182 in FIG. 2 may be omitted. The vehicle equipped with the power storage device is not limited to a passenger car, and may be a bus or a truck instead. The power storage device may be configured to be wirelessly chargeable.

The embodiment disclosed herein should be considered to be exemplary in all respects and not restrictive. The scope of the present invention is set forth in the claims rather than in the above description of the embodiment, and is intended to include all modifications within the meaning and scope equivalent to the claims.

## Claims

1. An annunciation control device that is configured to
acquire, prior to a second user using an power storage device that was used by a first user, a sudden death risk indicating a probability that the power storage device will suddenly enter an unusable state during use by the second user, based on first information indicating a usage history of the power storage device by the first user and second information indicating a scheduled way of use of the power storage device by the second user, and
execute first annunciation control to present a way of use that is different from the way of use indicated by the second information to at least one of the first user and the second user, when the sudden death risk is higher than a reference value.

2. The annunciation control device according to claim 1, configured to execute second annunciation control for displaying a degree of aging deterioration of the power storage device and the sudden death risk of the power storage device on the same screen.

3. The annunciation control device according to claim 1, wherein
the power storage device includes a battery, and
the annunciation control device is configured to, when swelling of the battery is detected in the power storage device, use the first annunciation control to notify at least one of the first user and the second user to use the storage device in an orientation that suppresses swelling of the battery.

4. A vehicle comprising:
the annunciation control device according to any one of claims 1 to 3; and the power storage device,
the vehicle further comprising a relay that switches between permission and prohibition of charging and discharging of the power storage device, wherein
the annunciation control device is configured to prohibit the charging and discharging of the power storage device by the relay at least until the first annunciation control is executed.

5. The vehicle according to claim 4, wherein
the annunciation control device is configured to
perform annunciation by the first annunciation control when the sudden death risk is higher than the reference value and also a predetermined requirement is met, to present to at least one of the first user and the second user to use the power storage device in the vehicle, and
perform annunciation by the first annunciation control when the sudden death risk is higher than the reference value and a predetermined requirement is not met, to present to at least one of the first user and the second user to use the power storage device not installed in the vehicle.
